(19)

**Europäisches Patentamt**
**European Patent Office**
**Office européen des brevets**

(11) **EP 2 522 069 B1**

(12) **EUROPÄISCHE PATENTSCHRIFT**

(45) Veröffentlichungstag und Bekanntmachung des Hinweises auf die Patenterteilung:
**18.07.2018 Patentblatt 2018/29**

(21) Anmeldenummer: **11702399.4**

(22) Anmeldetag: **31.01.2011**

(51) Int Cl.:
**H02M 7/5387** (2007.01)  **H02M 7/49** (2007.01)

(86) Internationale Anmeldenummer:
**PCT/EP2011/000424**

(87) Internationale Veröffentlichungsnummer:
**WO 2011/103959 (01.09.2011 Gazette 2011/35)**

(54) **SCHALTUNGSANORDNUNG FÜR MODULARE ANTRIEBSSTROMRICHTER**

CIRCUIT ARRANGEMENT FOR MODULAR DRIVE POWER CONVERTERS

CIRCUITERIE POUR CONVERTISSEURS DE COURANT D'ENTRAÎNEMENT MODULAIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2010 DE 102010008978**

(43) Veröffentlichungstag der Anmeldung:
**14.11.2012 Patentblatt 2012/46**

(73) Patentinhaber: **ECPE Engineering Center for Power Electronics GmbH**
**90443 Nürnberg (DE)**

(72) Erfinder:
• **Marquardt, Rainer**
**85521 Riemerling (DE)**

• **Michels, Nikolaus**
**85521 Ottobrunn (DE)**

(74) Vertreter: **Grünecker Patent- und Rechtsanwälte PartG mbB**
**Leopoldstraße 4**
**80802 München (DE)**

(56) Entgegenhaltungen:
**US-A1- 2008 205 093**   **US-B1- 6 519 169**

• **BIN WU ET AL: "Current-Source Converter and Cycloconverter Topologies for Industrial Medium-Voltage Drives", IEEE TRANSACTIONS ON INDUSTRIAL ELECTRONICS, IEEE SERVICE CENTER, PISCATAWAY, NJ, USA, Bd. 55, Nr. 7, 1. Juli 2008 (2008-07-01), Seiten 2786-2797, XP011226656, ISSN: 0278-0046, DOI: 10.1109/TIE.2008.924175**

EP 2 522 069 B1

**Beschreibung**

Zum Zweck der bidirektionalen Umwandlung elektrischer Energie von Gleichspannung -aus beispielsweise Akkumulatoren - in frequenzvariable Drehspannungen, sind eine Vielzahl von Stromrichterschaltungen bekannt.

Ein bevorzugtes Anwendungsgebiet dieser Stromrichter ist die Drehzahlsteuerung bürstenloser Drehfeldmaschinen im motorischen und generatorischen Betrieb. Insbesondere bei mobilem Einsatz - wie beispielsweise in Fahrzeugen oder der Luftfahrt - sind u.a. ein extrem geringes Gewicht des Antriebssystems und eine hohe Verfügbarkeit erforderlich. Beide Anforderungen in Kombination werden von bekannten Stromrichterschaltungen nicht befriedigend erfüllt. Bekannte, überwiegend eingesetzte Schaltungen sind i.a. U-Umrichter (engl.: Voltage Source Converter).

Bezüglich Gewichtsminimierung sind die prinzipbedingt erforderlichen, großen Kondensatorbatterien und Filterdrosseln störend - des Weiteren auch das Gewicht der Motorkabel. Für mobile Anwendungen ist zusätzlich das Gewicht und Volumen der Kühleinrichtungen und der erforderlichen Wärmetauscher relevant. Letztgenannter Anteil ist im Wesentlichen nur durch eine Reduktion der Verlustleistung des Antriebssystems und in zweiter Linie durch möglichst hohe Kühlmitteltemperaturen minimierbar. Eine hohe Verfügbarkeit des Antriebssystems ist grundsätzlich mittels Schaltungstopologien mit inhärenter Redundanz der Leistungselektronik erreichbar.

Bezüglich der motorseitig notwendigen passiven Filter sind bekanntlich Multilevel-Converter vorteilhaft. Entsprechende Topologien sind u. a. aus IEEE TRANSACTIONS ON INDUSTRY APPLICATIONS, Vol 32. No. 3, May/June 1996, "Multilevel Converters -A New Breed of Power Converters", Verfasser: Jih-Sheng Lai und Fang Zheng Peng, bekannt.

Eine wesentliche Reduktion der Größe der erforderlichen Kondensatorbatterien oder eine verbesserte Verfügbarkeit wird jedoch nicht erreicht. Die gleichspannungsseitigen Kondensatorbatterien bekannter U-Umrichter (engl.: Voltage Source Converter) bilden zudem in bekannter Weise mit den gleichspannungsseitigen Filterdrosseln und/oder den parasitären Leistungsinduktivitäten passive Resonanzkreise, welche stationär und transient zu störenden Schwingungsvorgängen führen. Die Größe der Kapazität der Kondensatorbatterien wird in folge dessen auch durch die zulässige Höhe transienter Überspannungen bestimmt. Die theoretisch mögliche Reduktion der Kapazität mit steigender Taktfrequenz der Halbleiter, kann deshalb - insbesondere bei Anschluss mehrerer Stromrichter an einer gemeinsamen Gleichspannungsverteilung - nicht genutzt werden.

Die aus DE 1010 3031A1 "Stromrichterschaltungen mit verteilten Energiespeichern" bekannte Topologie ermöglicht eine hohe Verfügbarkeit auch bei Ausfällen/Defekten von Elektronikkomponenten/Subsystemen. Vorteilhaft sind die streng modulare Elektronikbauweise und die niedrigeren, frei wählbaren Halbleiterspannungen. Die Größe der erforderlichen Kondensatorbatterien ist jedoch ebenfalls für mobile Anwendungen von Nachteil.

Das Gewicht der Motorkabel lässt sich bei bekannten U-Umrichtern durch die Wahl einer möglichst hohen gleichspannungsseitigen Nennspannung reduzieren, so dass die Motoren für kleinere Ströme ausgelegt werden können. Eine solche Auslegung ist jedoch nicht frei wählbar oder sie ist aufgrund des steigenden Aufwandes für die Akkumulator-Batterien oder aus Sicherheits-gründen unerwünscht. Entsprechend dem Stand der Technik wird deshalb oft von zusätzlichen Gleichspannungswandlern (engl.: DC/DC-Converter) Gebrauch gemacht, so dass zumindest die Akkumulator-Batterien nicht für die hohe Gleichspannung der motorseitigen U-Umrichter ausgelegt werden müssen. Sehr nachteilig ist jedoch, dass die Gleichspannungswandler für die volle Antriebsleistung dimensioniert werden müssen, weitere Energieverluste verursachen und wiederum schwere, passive Komponenten - wie Glättungsdrosseln und Entstörfilter - benötigen.

Aus DE 102007013462A1 "Leistungselektronische Schaltungsanordnung für eine Drehfeldmaschine" sind Topologien bekannt, die es ermöglichen - ohne zusätzliche Gleichspannungswandler - den Motoren höhere und geregelte Spannungen zur Verfügung zu stellen, welche deutlich über der speisenden Gleichspannung liegen. Auch mit diesen Anordnungen gelingt es jedoch nicht, das Volumen und Gewicht, der bei bekannten U-Umrichtern erforderlichen Kondensatorbatterien nennenswert zu reduzieren.

US 6 519 169 B1 beschreibt eine spannungsgeführte Stromrichterschaltungsanordnung zur Umformung einer Gleichspannung in eine Wechselspannung. Für jede Phase der zu erzeugenden Wechselspannung wird eine Anordnung bestehend aus mindestens zwei in Serie geschalteten Stromventilen und zwei in Serie geschalteten Kondensatoren eingesetzt. Diese Stromventile werden dabei jeweils von einem abschaltbaren Halbleiterelement und einem Gleichrichterelement gebildet. Die Verbindungspunkte der in Serie geschalteten Stromventile bzw. der in Serie geschalteten Kondensatoren werden mit einer Wicklung eines Transformators verbunden, so dass die zweite Wicklung dieses Transformators eine Phase des Wechselspannungsnetzes erzeugt. Die Anordnungen für die jeweiligen Phasen werden in Serie geschaltet, so dass der erste und letzte Anschluss dieser Serienschaltung mit der Gleichspannung verbunden wird.

Es ist Aufgabe der Erfindung, ein Verfahren und eine Vorrichtung zur bidirektionalen Umwandlung von Gleichspannung in mehrphasige Drehspannung bereitzustellen, mit dessen Hilfe die genannten Nachteile vermieden werden. Diese Aufgabe wird gelöst durch eine Vorrichtung zur bidirektionalen Umwandlung von Gleichspannung in mehrphasige Drehspannung über einen Stromrichter bestehend aus mehreren in Reihe geschalteten Submodulen mit den in Anspruch 1 genannten Merkmalen und durch ein Verfahren zur Ansteuerung eines Stromrichters zur bidirektionalen Umwandlung von Gleichspannung in mehrphasige Drehspannung über einen Stromrichter bestehend aus mehreren in Reihe geschalteten Submodulen mit den in den Anspruch 8 genannten Merkmalen. Vorteilhafte Ausgestaltungen der Erfindung sind jeweils Gegenstand der Unteransprüche.

Weitere Ziele sind es, die genannten Vorteile der aus DE 10103031A1 und DE 102007013462A1 bekannten Anordnungen zu vereinen und die genannten Nachteile zu vermeiden. Dies sind, wie bereits erläutert, insbesondere die folgenden Punkte:

1. Modulare Realisierbarkeit der Leistungselektronik aus einer wählbaren Anzahl identischer, sogenannter Submodule (10)

2. Möglichkeit des Weiterbetriebes des Stromrichters bei Defekten eines Submodules (10)

3. Funktionsfähigkeit ohne voluminöse, passive Komponenten - insbesondere ohne Kondensatoren parallel zur speisenden Gleichspannung

4. Möglichkeit zum Einsatz von Halbleitern geringer Sperrspannung verglichen mit der speisenden Gleichspannung - insbesondere Feldeffekttransistoren.

5. Geringe Verlustleistung verglichen mit bekannten U-Umrichtern

6. Prinzipbedingt geringer Bedarf an internen Energiespeichern, verglichen mit bekannten U-Umrichtern

7. Gute Eignung zum direkten Anbau/Einbau an Drehfeldmaschinen

Diese Vorteile werden durch die erfindungsgemäßen Maßnahmen entsprechend den Patentansprüchen erzielt.

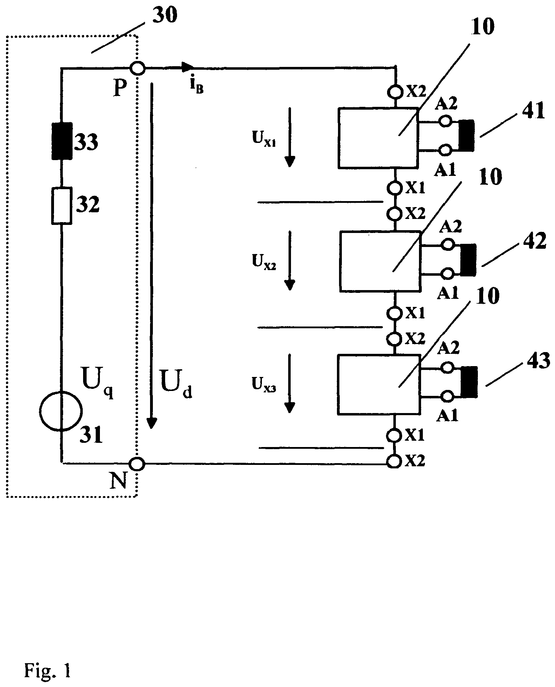

Fig. 1 zeigt eine erfindungsgemäße Schaltungsanordnung mit einer Anzahl von beispielhaft drei Submodulen (10) angeschlossen an eine Gleichspannungsquelle (30). Letztere ist ersatzschaltungsmäßig dargestellt als ideale Quelle (31) mit parasitärem Innenwiderstand (32) und Streuinduktivität (33). An ihren Anschlussklemmen (P) und (N) liegt die belastungsabhängige Gleichspannung ($U_d$). Über eine Gleichspannungsverteilung mit Kabeln oder Stromschienen können weitere Antriebssysteme und andere Verbraucher parallel angeschlossen sein. Dadurch kann die Gleichspannung erheblich und unvermittelt schwanken, was bei konventionellen U-Umrichtern erhebliche Ausgleichsströme und Stromschwingungen in den Kondensatorbatterien verursacht.

Gemäß der Erfindung sind alle Submodule (10) mittels ihrer Gleichspannungsanschlüsse (X1, X2) in Reihenschaltung an die Gleichspannungsquelle (30) angeschlossen. Geeignete und vorteilhafte, innere Schaltungstopologien der Submodule (10) werden nachfolgend noch erläutert. Jedes Submodul (10) ist an je eine Statorwicklung (41 bis 43) der zugehörigen Drehfeldmaschine angeschlossen.

Diese Zuordnung und Aufteilung der Statorwicklungen (41-43) sei im Folgenden erläutert, da sie nicht der bei Drehfeldmaschinen üblichen Stern- oder Dreieckschaltung entspricht.

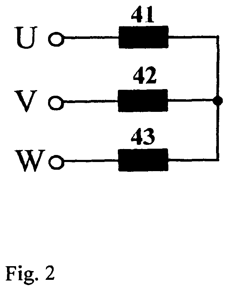

Fig. 2 zeigt zur näheren Erläuterung beispielhaft die Statorwicklungen (41...43) einer üblichen Drehfeldmaschine, die in bekannter Weise in Sternschaltung verschaltet sind. An den äußeren Motoranschlüssen (U, V, W) ist ein Stromrichter (i.a. ein konventioneller U-Umrichter) angeschlossen, welcher drei gegeneinander phasenverschobene Spannungen erzeugt. In den erfindungsgemäßen Schaltungsanordnungen werden die Statorwicklungen getrennt und einzeln mit entsprechend phasenverschobenen Spannungen gespeist. Dies ist erforderlich um die erfindungsgemäßen Vorteile zu erreichen. Die getrennte Anordnung der Statorwicklungen ist für die Funktion des Antriebssystemes äquivalent und ist grundsätzlich bekannt. Die schaltungstechnische Trennung der Statorwicklungen kann in der praktischen Anwendung Nachteile aufweisen, die unter den vorliegenden Randbedingungen der Erfindung jedoch von sehr geringer Relevanz sind:

- Erzeugt der speisende Stromrichter störende Spannungsoberschwingungen mit durch 3 teilbarer Ordnungszahl, so heben sich diese nicht mehr in ihrer Wirkung auf die Maschine auf. Dieser Punkt ist hier, bei generell oberschwingungsarmer Speisung mit Multilevel-Spannungen und hoher, erzielbarer Pulsfrequenz jedoch nicht relevant.

- Die Anzahl der elektrischen Verbindungen zwischen Maschine und Stromrichter erhöht sich. Dieser Punkt ist dann vernachlässigbar, wenn Stromrichter und elektrische Maschine konstruktiv zusammengefasst werden können. Dies zu ermöglichen, ist ein Ziel der Erfindung (siehe den bereits genannten Punkt 7)).

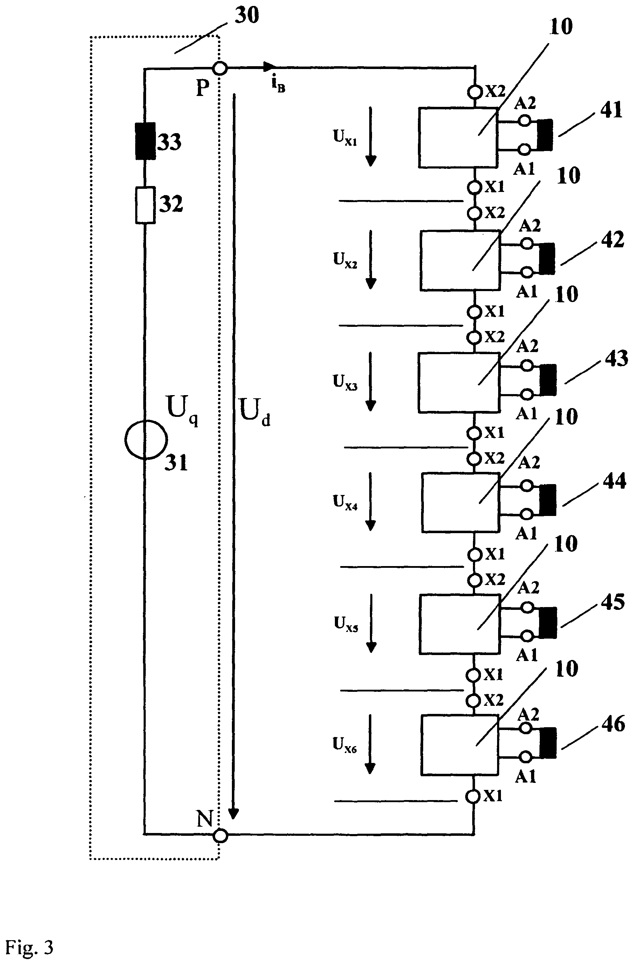

Fig. 3 zeigt eine erfindungsgemäße Schaltungsanordnung analog Fig. 1, jedoch mit einer höheren Anzahl von Submodulen (10). Es sind hier beispielhaft n=6 Submodule (10) eingesetzt. Erfindungsgemäß ist grundsätzlich jede beliebige Anzahl von (mehr als zwei) Submodulen (10) einsetzbar. Drehfeldmaschinen, welche bereits prinzipbedingt eine konstruktiv gegebene Aufteilung der Statorwicklungen in einzelne Teilwicklungen aufweisen, eignen sich besonders gut für erfindungsgemäße Schaltungsanordnungen mit höherer Anzahl von Submodulen. Solche elektrischen Maschinen sind z. B. permanenterregte Maschinen mit Einzelzahnbewicklung im Stator oder Transversalflussmaschinen. Eine Anordnung mit einer höheren Anzahl (n) von Submodulen bietet u.a. den Vorteil eines besseren Verhaltens bei einer Funktionsstörung oder dem Defekt eines Submoduls (Redundanzfall).

Die erfindungsgemäße Schaltungsanordnung kann dann unter folgenden, günstigen Voraussetzungen mit verminderter Maximalleistung weiterbetrieben werden:

- Die gleichspannungsseitige Klemmenspannung ($U_x$) des betroffenen Submodules ist näherungsweise $U_x = 0$.

- Die wechselstromseitige Klemmenspannung ($U_w$) des betroffenen Submodules ist näherungsweise $U_w = 0$.

Diese Bedingungen entsprechen einem allpoligen, inneren Kurzschluss des betroffenen Submodules (10). Er stellt sicher, dass das Submodul keine nennenswerte Leistung aufnimmt und nicht überhitzen oder unter Lichtbogenwirkung brennen kann. Dieser Zustand lässt sich durch entsprechende Ansteuerung des Submodules einstellen, wie im Folgenden bei der Erläuterung der Schaltzustände nach Tab. 1 noch gezeigt wird. Wesentlich bedeutender ist jedoch, dass sich dieser Zustand bei Fehlern der Ansteuerung oder der leistungselektronischen Schalter ((1) bis (6)) selbsttätig einstellt, sofern nur die Kontaktierungen der Halbleiterchips nicht verbrennen oder öffnen und diese weiterhin die betriebsmäßigen Ströme führen können.

Die Voraussetzungen hierfür sind bei den erfindungsgemäßen Schaltungsanordnungen sehr günstig, weil die hohen - die Kontaktierungen zerstörenden - Entladeenergien der großen Gleichspannungskondensatoren konventioneller U-Umrichter und die nachfolgend hohen Kurzschlussströme der Gleichspannungsquelle (30) nicht auftreten. Diese Vorteile resultieren daraus, dass erfindungsgemäß die internen Speicherkondensatoren (9) der Submodule (10) wesentlich kleiner bemessen werden können und die Gleichspannungsquelle (30) nicht kurzgeschlossen wird. Der fehlende Gleichspannungsanteil (z.B. $U_{x1}$) des defekten Submodules (10) kann durch entsprechend höher ausgesteuerte Anteile (z.B. $U_{x2}$ bis $U_{x6}$) der noch steuerbaren, intakten Submodule (10) kompensiert werden.

Wie aus anderen, technischen Systemen mit inhärenter Redundanz bekannt, ist zu diesem Zweck eine geringe Auslegungsreserve der grundlegenden Dimensionierung vorzusehen. D. h. im vorliegenden Fall, dass die max. zulässigen Spannungen von (n-1) Submodulen höher als die max. Spannung der Gleichspannungsquelle sein müssen. Ein defektes Submodul, kann nach bekannten Verfahren immer durch seine abweichenden, betriebsmäßig erfassten Messgrößen erkannt werden. Auch können die angeschlossenen Drehfeldmaschinen dergestalt dimensioniert werden, dass die Kontaktierungen der Halbleiterchips - oder die Statorwicklung selbst - nicht durch die resultierenden Fehlerströme zerstört werden.

Weitere Zusatzmaßnahmen, wie zusätzliche Kurzschluss- oder Trennschalter, sind ebenfalls möglich und bekannt. Die erfindungsgemäßen Schaltungsanordnungen bieten jedoch, wie erläutert, vergleichsweise sehr günstige Randbedingungen um ohne weitere Zusatzmaßnahmen den redundanten Weiterbetrieb zu ermöglichen. Eine allgemein gültige Aussage ist jedoch nicht möglich, da die Stromtragfähigkeit der Halbleiter-Kontaktierungen im Einzelfall quantitativ berücksichtigt werden muss.

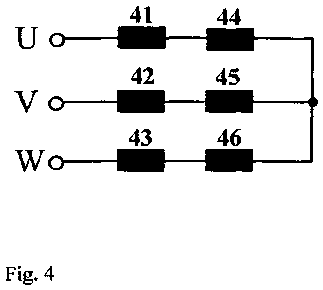

Fig. 4 zeigt zur weiteren Erläuterung von Fig. 3 beispielhaft die Anordnung der Statorwicklungen (41 - 46) einer möglichen, zugehörigen dreiphasigen Drehfeldmaschine zu Fig. 3. Die Anzahl der Phasen der Drehfeldmaschine ist bei den erfindungsgemäßen Schaltungsanordnungen frei wählbar, da sich jedes Submodul (10) rein steuerungstechnisch in jeder beliebigen Phasenlage ansteuern lässt. Es ist deshalb beispielsweise auch möglich, dass die sechs Statorwicklungen (41 bis 46) in Fig. 3 zu einer sechsphasigen Maschine gehören.

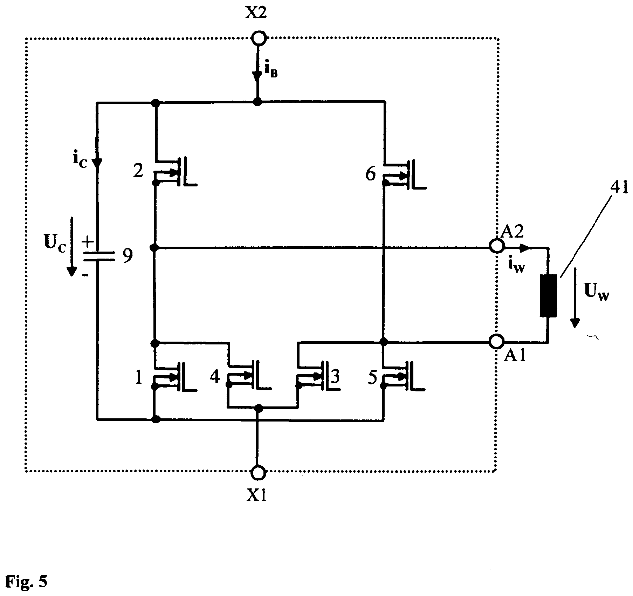

Fig. 5 zeigt eine vorteilhafte, innere Schaltung eines erfindungsgemäßen Submodules (10). Es enthält sechs steuerbare, elektronische Schalter ((1) bis (6)) sowie einen unipolaren Speicherkondensator (9). Die steuerbaren, elektronischen Schaltern ((1) bis (6)) sind als Feldeffekt-Transistoren (T1 bis T6) dargestellt, was der bevorzugten Ausführungsform entspricht. Auch andere Halbleiterschalter sind einsetzbar, sofern sie vom rückwärtsleitenden Typus sind (engl.: reverse conducting). Die zugehörigen, steuerbaren Schaltzustände sind zur weiteren Erläuterung der Funktion in Tab. 1 und Tab. 2 angegeben. Die in Tab. 1 angeführten Schaltzustände sind grundsätzlich mindestens erforderlich um das Submodul (10) erfindungsgemäß einsetzen und steuern zu können.

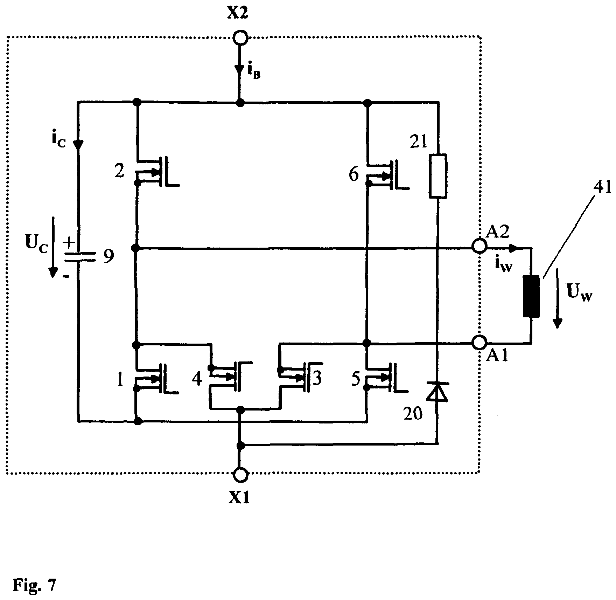

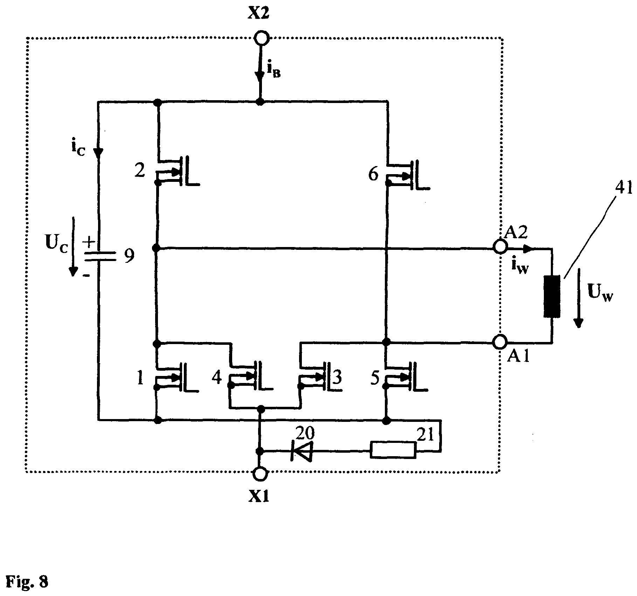

Zusätzlich existiert (als Sonderfall) noch ein Zustand bei dem alle 6 elektronischen Schalter ((1) bis (6)) ausgeschaltet sind. Dieser ist nur zum Unterbrechen oder Stillsetzen des Antriebes von Interesse und wird in Zusammenhang mit Fig. 7 und Fig. 8 erläutert.

Weitere Schaltzustände sind bei Erweiterung oder Veränderung der inneren Schaltung der Submodule prinzipiell möglich, jedoch nicht notwendig.

Tab. 1 sei im Folgenden näher erläutert. Sie ordnet die betrieblich ansteuerbaren Schaltzustände des Submoduls (10) den äußeren Klemmengrößen zu. Diese grundlegende, erfindungsgemäße Funktionalität gilt unabhängig von der gewählten Innenschaltung des Submoduls. Bei Vorgabe der Gleichspannung des unipolaren Speicherkondensators (9) gilt für die gleichspannungsseitige Klemmenspannung ($U_x$):

$$U_x = K_1 \cdot U_c$$

Für die wechselspannungsseitige Klemmenspannung ($U_w$) gilt:

$$U_w = K_2 \cdot U_c$$

Die Faktoren $K_1$ und $K_2$ sind die Steuergrößen, welche sich durch bestimmte Kombinationen der Schaltzustände der steuerbaren, elektronischen Schalter des Submodules vorgeben lassen. Bei Kenntnis - beziehungsweise Messung - der Klemmenströme in der Gleichspannungsseite ($i_B$) und Wechselspannungsseite ($i_w$) lässt sich auch der resultierende Strom ($i_C$) des internen Speicherkondensators (9) direkt angeben:

$$i_C = K_1 \cdot i_B - K_2 \cdot i_W$$

Alle drei Gleichungen gelten sowohl für die Momentanwerte als auch für die (arithmetischen) Mittelwerte der Spannungen und Ströme. Des Weiteren gelten sie für beliebige Polaritäten sowie für beide Energierichtungen. Die Erzeugung der gewünschten Grundfrequenz und Phasenlage der wechselspannungsseitigen Größen erfolgt in bekannter Art - vorzugsweise mittels einer hohen, vorgegebenen Taktfrequenz und einer Pulsweitenmodulation. Wechselspannungsseitig lassen sich die diskreten Spannungswerte $U_W = + U_C$, $U_W = 0$ und $U_W = - U_C$ einstellen (Multilevel). Dies ermöglicht in Zusammenhang mit der sehr hohen - durch die Niedervolt-Halbleiter ermöglichten - Taktfrequenz eine sehr gute, oberschwingungsarme Speisung der Drehfeldmaschine und eine hohe Regeldynamik. In jedem Taktzyklus der Pulsweitenmodulation kann des Weiteren die mittlere, gleichspannungsseitige Klemmenspannung durch Pulsweitenmodulation so eingestellt werden, dass sie in guter Näherung der momentanen Leistung an den wechselstromseitigen Klemmen proportional ist. Dadurch wird der Energiebedarf (pro Taktzyklus) aus dem Speicherkondensator (9) theoretisch zu Null. In der Praxis ist erreichbar, dass der Energiebedarf zumindest soweit minimiert ist, dass der Speicherkondensator nur die kleinen Differenzen der Energien über wenige Taktzyklen ausgleichen muss. Aus diesem Verfahren resultiert (entsprechend dem Leistungsverlauf der Wechselspannungsseite) eine Pulsation der Klemmenspannung ($U_x$) des Submodules mit doppelter Grundfrequenz. Erfindungsgemäß wird diese erst durch Addition der Klemmenspannung der weiteren Submodule mit abweichenden Phasenlagen ausgeglichen, so dass die resultierende Gleichspannung zur Batterieseite nur noch die Taktfrequenz als Störfrequenz enthält. Letztere lässt sich in bekannter Art zusätzlich durch eine Phasenverschiebung der Taktzyklen erhöhen.

Motor- und Generatorbetrieb der angeschlossenen Drehfeldmaschine (bidirektionaler Leistungsfluss) ist erfindungsgemäß ohne Einschränkungen möglich. In der technischen Realisierung ist selbstverständlich nur eine Polarität der Spannung der Gleichspannungsversorgung (30) und eine Polarität der Spannung ($U_c$) des Speicherkondensators (9) vorgegeben. Bei Generatorbetrieb ist dann folglich der Batteriestrom ($i_B$) der Gleichspannungsversorgung (30) von negativer Polarität ($i_B < 0$).

Tab. 2 zeigt - in Ergänzung zu Tab. 1 - die Zuordnung der Schaltzustände nach Tab. 1 zu den Schaltzuständen der steuerbaren elektronischen Schalter (T1(1), T2(2), T3(3), T4(4), T5(5), T6(6)), wenn speziell die erfindungsgemäßen Ausführungen der Innenschaltung der Submodule nach Fig. 5, 6, 7 oder 8 eingesetzt werden. Diese erfindungsgemäßen Ausführungen weisen Vorteile in der technischen Realisierung bzgl. Halbleiteraufwand, Halbleiterverlustleistung und der Anschlusstechnik auf - wie im Folgenden erläutert wird.

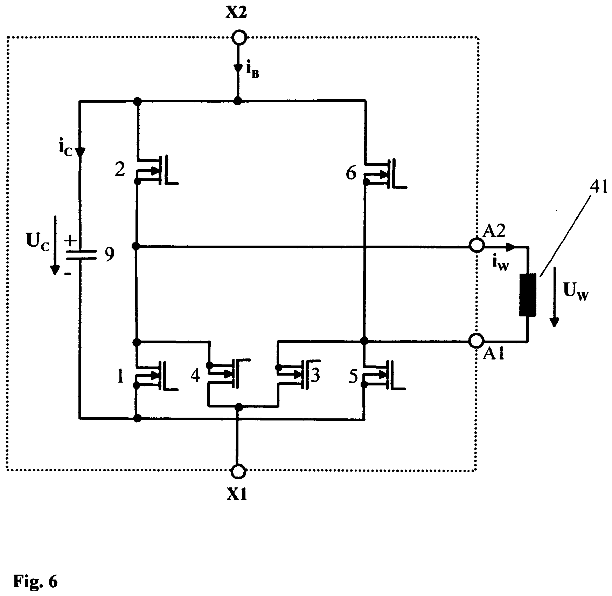

Fig. 6 zeigt ein erfindungsgemäßes Submodul, bei dem - im Gegensatz zu Fig. 5 - die steuerbaren elektronischen Schalter (T3(3), T4(4)) mit jeweils vertauschten Leistungsanschlüssen eingefügt sind. Die Funktionalität (nach Tab. 1 und Tab. 2) wird dadurch nicht verändert. Bei Einsatz von Feldeffekt-Transistoren als elektronische Schalter bedeutet dies, dass in Fig. 6 die gleichstromseitige Klemme (X1) von den beiden Drain-Elektroden der Transistoren (T3, T4) gebildet wird. Dies kann für eine hochintegrierte oder monolithisch integrierte Realisierung des Submoduls von Vorteil sein, weil die extern zugänglichen Anschlüsse somit an der großflächigen Rückseite der Halbleiterchips liegen und z.B. nicht über Borddrähte geführt werden müssen. Dies gilt in (Fig. 6) auch für die anderen externen Anschlüsse (X2 entspricht Drain von T2, T6; A1 entspricht Drain von T5; A2 entspricht Drain von T1).

Ein weiterer Vorteil der erfindungsgemäßen Vorrichtungen ist die im Vergleich zur speisenden Gleichspannung - sehr niedrige Spannung der Halbleiter. Dies hat eine Reihe halbleiterphysikalischer und technischer Vorteile:

- Sehr gute Voraussetzungen für die monolithische Integration zusammen mit der Niedervolt-Technologie der zugehörigen Steuerelektronik

- Große Sicherheit gegenüber Isolationsversagen in feuchter und verschmutzter Umgebung

- Sehr hohe erzielbare Taktfrequenzen aufgrund geringer Schaltverluste

- Hohe, zulässige Halbleitertemperaturen

Letztgenannter Punkt ist grundsätzlich aus der Halbleiterphysik bekannt: Für ein gegebenes Halbleitermaterial ist die technisch sinnvoll erreichbare Einsatzgrenztemperatur für eine Niedervolt-Technologie wesentlich höher. Speziell bei Einsatz von Feldeffekt-Transistoren resultiert die Auslegung mit niedriger Spannung in einem weiteren Vorteil, der es erlaubt die Verlustleistung zu senken. Mit gut erreichbaren Durchlassspannungen (unter 0,4 V bei Silizium) können die parasitären, chipinternen pn-Übergänge der Inversdioden bei beliebiger Halbleiterstromrichtung immer gesperrt bleiben, wodurch Schaltverluste der Inversdiode vermieden werden. Dies geschieht in bekannter Weise durch das Einschalten des Kanals des Feldeffekt-Transistors als Nebeneffekt der Ansteuerung des Gates. Es werden dadurch zusätzliche antiparalle Dioden (i.a. Schottky-Dioden) entbehrlich und die Halbleiterfläche des Feldeffekt-Transistors ist auch bei negativer Stromrichtung gut ausgenutzt. Diese vorteilhaften Effekte sind mit Bauelementen hoher Sperrspannung aufgrund der höheren Durchlassspannungen technisch nicht mehr vorteilhaft nutzbar.

Fig. 7 zeigt eine Ausführung des Submoduls nach Fig. 6 mit einem zusätzlichen Schutzglied. Dieses besteht im Wesentlichen aus einer Schutzdiode (20) und optional eine Dämpfungswiderstand (21), welcher jedoch nicht notwendigerweise vorhanden sein muss. Die Bauelemente werden im normalen Betrieb nicht beansprucht. Das Schutzglied ist sinnvoll, falls der gleichstromseitige Strom (Batteriestrom ($i_B$)) im laufenden Betrieb unvermittelt abgeschaltet werden und der Antrieb durch Abschalten aller Transistoren schnellstmöglich gesperrt werden soll. In einem solchen Fall werden die Halbleiterspannungen mittels der Schutzdiode begrenzt, so dass die Halbleiterspannungen die im normalen Betrieb auftretenden Werte nicht übersteigen.

Fig. 8 zeigt eine Ausführung des Submodules nach Fig. 6 mit einem zusätzlichen Schutzglied. Funktion und Erläuterung entsprechen denn von Fig. 7. Es ist lediglich - aufgrund der umgekehrten Einbaurichtung von (T3, T4) auch die Schutzdiode entsprechend in angepasster Funktionsrichtung eingefügt.

**Tabelle 1**

| Nr. | $K_1$ | $K_2$ | $U_x$ | $U_w$ | $i_C$ |
|-----|-------|-------|-------|-------|-------|
| 0 | 0 | 0 | 0 | 0 | 0 |
| 1 | 0 | 1 | 0 | $+ U_C$ | $0 - i_W$ |
| 2 | 1 | 1 | $+ U_C$ | $+ U_C$ | $(+ i_B - i_W)$ |
| 3 | 1 | 0 | $+ U_C$ | 0 | $+ i_B + 0$ |
| 4 | 1 | - 1 | $+ U_C$ | $- U_C$ | $(+ i_B + i_W)$ |
| 5 | 0 | - 1 | 0 | $- U_C$ | $0 + i_W$ |

**Tabelle 2**

| Nr. | V. | $K_1$ | $K_2$ | T1 | T2 | T3 | T4 | T5 | T6 |
|-----|-----|-------|-------|----|----|----|----|----|----|
| 0 | .0 | 0 | 0 | 0 | 1 | 0 | 1 | 0 | 1 |
| 0 | .1 | 0 | 0 | 0 | 1 | 1 | 0 | 0 | 1 |
| 0 | .2 | 0 | 0 | 0 | 1 | 1 | 1 | 0 | 1 |
| 1 | .0 | 0 | 1 | 0 | 1 | 0 | 1 | 1 | 0 |
| 2 | .0 | 1 | 1 | 0 | 1 | 1 | 0 | 1 | 0 |
| 3 | .0 | 1 | 0 | 1 | 0 | 1 | 0 | 1 | 0 |
| 3 | .1 | 1 | 0 | 1 | 0 | 0 | 1 | 1 | 0 |
| 3 | .2 | 1 | 0 | 1 | 0 | 1 | 1 | 1 | 0 |

(fortgesetzt)

| Nr. | V. | $K_1$ | $K_2$ | T1 | T2 | T3 | T4 | T5 | T6 |
|---|---|---|---|---|---|---|---|---|---|
| 4 | .0 | 1 | -1 | 1 | 0 | 0 | 1 | 0 | 1 |
| 5 | .0 | 0 | -1 | 1 | 0 | 1 | 0 | 0 | 1 |

**Patentansprüche**

1. Vorrichtung zur bidirektionalen Umwandlung von Gleichspannung einer Gleichspannungsversorgung (30) in eine frequenzvariable Drehspannung eines Drehspannungssystems mit einer Stromrichterschaltung bestehend aus mehreren baugleichen, mit jeweils einer Taktfrequenz getakteten Submodulen (10), welche jeweils

   - zwei gleichstromseitige Klemmen (X1, X2),
   - zwei wechselstromseitige Klemmen (A1, A2),
   - einen Speicherkondensator (9), der derart dimensioniert ist, dass nur der geringe Energiebedarf zwischen einzelnen Taktzyklen der Taktfrequenz ausgeglichen werden kann, und
   - eine Anzahl an Schalttransistoren, wobei durch Kombination von deren Schaltzuständen die gleichspannungsseitige Klemmenspannung des Submoduls unabhängig von der wechselspannungsseitigen Klemmenspannung des Submoduls einstellbar ist

   aufweisen,
   wobei die Submodule über ihre gleichstromseitigen Klemmen in Reihe geschaltet sind, so dass die erste Klemme des ersten Submoduls und die zweite Klemme des letzten Submoduls mit der Gleichspannungsversorgung verbunden werden, und
   wobei die wechselstromseitigen Klemmen entweder von einem oder von einem Teil aller Submodule jeweils eine von mindestens zwei phasenwinkelversetzten Phasen des Drehspannungssystems bilden.

2. Vorrichtung nach Anspruch 1, wobei die Stromrichterschaltung speziell zur Speisung einer Drehfeldmaschine vorgesehen ist.

3. Vorrichtung nach Anspruch 2, wobei jede einzelne Wicklung der Drehfeldmaschine in jeweils eine Gruppe einzelner Teilwicklungen aufgeteilt ist, so dass jeweils eine Gruppe von Submodulen mit gleicher Phase jeweils eine Gruppe von Teilwicklungen speist.

4. Vorrichtung nach einem der Ansprüche 1 bis 3, wobei in den Submodulen Halbleiter mit niedriger Sperrspannung eingesetzt werden.

5. Vorrichtung nach einem der Ansprüche 1 bis 4, wobei in den Submodulen Feldeffekt-Transistoren verwendet werden.

6. Vorrichtung nach einem der Ansprüche 1 bis 5, wobei die Submodule derart phasenversetzt getaktet werden, dass sich eine resultierende Frequenz von Störungen auf die Gleichspannungsversorgung aus der Taktfrequenz multipliziert mit der Anzahl der Submodule ergibt.

7. Vorrichtung nach einem der Ansprüche 1 bis 6, wobei jedes Submodul 6 Schalttransistoren, T1, T2, T3, T4, T5 und T6 (1, 2, 3, 4, 5 und 6) sowie den Speicherkondensator (9) umfasst,
   wobei jeder Schalttransistor zwei Leistungsanschlüsse und einen Steueranschluss aufweist;
   wobei die gleichstromseitigen Klemmen (X1, X2) über eine Brückenschaltung, bestehend aus den 4 Transistoren T2, T3, T4 und T6 (2, 3, 4 und 6) mit den wechselstromseitigen Klemmen (A1, A2) so verbunden sind, dass der jeweils erste Leistungsanschluss von T2 (2) und T6 (6) mit der zweiten gleichstromseitigen Klemme verbunden ist, der jeweils zweite Leistungsanschluss von T4 (4) und T3 (3) mit der ersten gleichstromseitigen Klemme verbunden ist, der zweite Leistungsanschluss von T2 (2) mit dem ersten Leistungsanschluss von T4 (4) und der zweiten wechselstromseitigen Klemme verbunden ist, und der zweite Leistungsanschluss von T6 (6) mit dem ersten Leistungsanschluss von T3 (3) und der ersten wechselstromseitigen Klemme verbunden ist; und
   wobei der erste Anschluss des Speicherkondensators mit einer gleichstromseitigen Klemme verbunden ist und der zweite Anschluss des Speicherkondensators mit dem jeweils zweiten Anschluss der zwei Transistoren T1 (1) und T5 (5) verbunden ist, deren jeweils erster Anschluss mit jeweils einer der wechselstromseitigen Klemmen verbunden ist.

8. Verfahren zur Ansteuerung einer Stromrichterschaltung bestehend aus mehreren baugleichen, jeweils mit einer Taktfrequenz getakteten Submodulen, zur bidirektionalen Umwandlung von Gleichspannung einer Gleichspannungsversorgung in eine frequenzvariable Drehspannung eines Drehspannungssystems, wobei die Submodule

- jeweils zwei gleichstromseitige Klemmen (X1, X2)
- zwei wechselstromseitige Klemmen (A1, A2)
- einen Speicherkondensator (9), der derart dimensioniert ist, dass nur der geringe Energiebedarf zwischen einzelnen Taktzyklen der Taktfrequenz ausgeglichen werden kann, und
- eine Anzahl an Schalttransistoren, wobei durch Kombination von deren Schaltzuständen die gleichspannungsseitige Klemmenspannung des Submoduls unabhängig von der wechselspannungsseitigen Klemmenspannung des Submoduls einstellbar ist,

aufweisen und deren gleichstromseitige Klemmen in Reihe geschaltet sind, in ihrer Taktung und Pulsweite so angesteuert werden, dass
die wechselstromseitigen Klemmen entweder von einem oder von einem Teil aller Submodule jeweils eine von mindestens zwei phasenwinkelversetzten Phasen des Drehspannungssystems bilden.

9. Verfahren nach Anspruch 9, wobei die Ansteuerung der Stromrichterschaltung dazu dient, eine Drehfeldmaschine bezüglich Drehzahl und Drehmoment zu steuern.

10. Verfahren nach einem der Ansprüche 8 oder 9, wobei die Submodule bezüglich ihrer Taktung phasenversetzt angesteuert werden, so dass eine resultierende Frequenz von Störungen auf die Gleichspannungsversorgung sich aus der Taktfrequenz multipliziert mit der Anzahl der Submodule ergibt.

**Claims**

1. Device for bi-directional conversion of direct voltage of a direct voltage supply (30) into a variable-frequency three-phase voltage of a three-phase voltage system with a power converter circuit comprising a plurality of identically designed sub-modules (10) each being clocked with a clock frequency, which each comprise:

- two terminals (X1, X2) on the direct current side;
- two terminals (A1, A2) on the alternating current side;
- a storage capacitor (9), which is dimensioned in a manner that only the small energy requirement is compensated between individual clock cycles of said clock frequency; and
- a number of switching transistors, where a terminal voltage on the direct voltage side of said sub-module is adjustable by combination of their switching states independently of a terminal voltage on the alternating voltage side of said submodule,

where said sub-modules are connected in series by means of their terminals on the direct current side, so that the first terminal of the first sub-module and the second terminal of the last sub-module are connected to said direct voltage supply; and
where said terminals on the alternating current side of either one, or of a part of all submodules each form one of at least two phase-angle offset phases of said three-phase voltage system.

2. Device according to claim 1, where said power converter circuit is specifically designed to supply a rotating field machine.

3. Device according to claim 2, where each individual winding of said rotating field machine is divided into a group of individual partial windings, so that each group of sub-modules with the same phase supplies a respective group of partial windings.

4. Device according to claims 1 to 3, where semiconductors with low blocking voltage can be used in said sub-modules.

5. Device according to claims 1 to 4, where field-effect transistors can be used in said submodules.

**6.** Device according to claims 1 to 5, where said sub-modules are clocked in such a phase-shifted manner that a resulting frequency of noise to said direct voltage supply results from said clock frequency multiplied by said number of sub-modules.

**7.** Device according to claims 1 to 6, where each sub-module comprises six switching transistors T1, T2, T3, T4, T5 and T6 (1, 2, 3, 4, 5, 6) as well as said storage capacitor (9),
where each switching transistor comprises two power connections and a control connection;
wherein said terminals (X1, X2) on the direct current side are connected by a bridge circuit consisting of four transistors T2, T3, T4 and T6 (2, 3, 4, 6) to said terminals (A1, A2) on the alternating current side so that the respective first power connection of T2 (2) and T6 (6) is connected to the second terminal on the direct current side, the respective second power connection of T4 (4) and T3 (3) is connected to the first terminal on the direct current side, the second power connection of T2 (2) is connected to the first power connection of T4 (4) and the second terminal on the alternating current side, and the second power connection of T6 (6) is connected to the first power connection of T3 (3) and the first terminal on the alternating current side; and
where the first connection of said storage capacitor is connected to a terminal on the direct current side and the second connection of said storage capacitor is connected to the respective second connection of said two transistors T1 (1) and T5 (5), the respective first connection of which is each connected to one of said terminals of the alternating current side.

**8.** Method for controlling a power converter circuit comprising a plurality of identically designed sub-modules being clocked with a clock frequency for bi-directional conversion of direct voltage of a direct voltage supply into a variable-frequency three-phase voltage of a three-phase voltage system, where said sub-modules, each comprising

       - two terminals (X1, X2) on the direct current side;
       - two terminals (A1, A2) on the alternating current side;
       - a storage capacitor (9), which is dimensioned in a manner that only the small energy requirement is compensated between individual clock cycles of said clock frequency; and
       - a number of switching transistors, where a terminal voltage on the direct voltage side of said sub-module is adjustable by combination of their switching states independently of a terminal voltage on the alternating voltage side of said submodule,

and having their terminals on the direct current side connected in series, are in their clocking and pulse width controlled such that
said terminals on the alternating current side of either one, or of a part of all sub-modules each form one of at least two phase-angle offset phases of said three-phase voltage system.

**9.** Method according to claim 8, wherein the control of said power converter circuit is used to control a rotating field machine with respect to rotational speed and torque,

**10.** Method according to claim 8 or 9, where said sub-modules are controlled in a phase-shifted manner with respect to their clocking so that a resulting frequency of noise to said direct voltage supply results from said clock frequency multiplied by said number of submodules.

**Revendications**

**1.** Dispositif pour la conversion bidirectionnelle d'une tension continue d'une alimentation de tension continue (30), en une tension polyphasée de fréquence variable d'un système de tensions polyphasées, avec un circuit de convertisseur de courant constitué de plusieurs sous-modules (10) de construction identique et cadencés respectivement avec une fréquence d'horloge, qui comportent chacun

       - deux bornes de courant continu (X1, X2),
       - deux bornes de courant alternatif (A1, A2),
       - un condensateur de stockage (9), qui est dimensionné de manière à ne pouvoir compenser que le faible besoin d'énergie entre les cycles d'horloge individuels de la fréquence d'horloge, et
       - un certain nombre de transistors de commutation, la combinaison de leurs états de commutation permettant de régler la tension aux bornes de courant continu du sous-module, indépendamment de la tension aux bornes de courant alternatif du sous-module,

dispositif

dans lequel les sous-modules sont montés en série par l'intermédiaire de leurs bornes de courant continu, de sorte que la première borne du premier sous-module et la deuxième borne du dernier sous-module sont reliées à l'alimentation de tension continue, et

dans lequel les bornes de courant alternatif de l'un ou d'une partie de tous les sous-modules, forment respectivement l'une d'au moins deux phases décalées en phase du système de tensions polyphasées.

2. Dispositif selon la revendication 1, dans lequel le circuit de convertisseur de courant est prévu spécialement pour l'alimentation d'une machine à induction.

3. Dispositif selon la revendication 2, dans lequel chaque enroulement individuel de la machine à induction est subdivisé respectivement en un groupe d'enroulements partiels individuels, de manière telle, qu'un groupe respectif de sous-modules de même phase alimente respectivement un groupe d'enroulements partiels.

4. Dispositif selon l'une des revendications 1 à 3, dans lequel les sous-modules utilisent des semiconducteurs à faible tension de blocage.

5. Dispositif selon l'une des revendications 1 à 4, dans lequel les sous-modules utilisent des transistors à effet de champ.

6. Dispositif selon l'une des revendications 1 à 5, dans lequel les sous-modules sont cadencés de manière décalée en phase de sorte qu'une fréquence résultante de parasites sur l'alimentation de tension continue s'obtient à partir de la fréquence d'horloge multipliée par le nombre de sous-modules.

7. Dispositif selon l'une des revendications 1 à 6, dans lequel chaque sous-module comporte 6 transistors de commutation T1, T2, T3, T4, T5 et T6 (1, 2, 3, 4, 5 et 6) ainsi que le condensateur de stockage (9),

dans lequel chaque transistor de commutation comporte deux bornes de puissance et une borne de commande ;

dans lequel les bornes de courant continu (X1, X2) sont reliées, par l'intermédiaire d'un circuit en pont constitué des 4 transistors T2, T3, T4 et T6 (2, 3, 4 et 6), aux bornes de courant alternatif (A1, A2) de manière telle, que la première borne de puissance respective de T2 (2) et de T6 (6) soit reliée à la deuxième borne de courant continu, que la deuxième borne de puissance respective de T4 (4) et de T3 (3) soit relie à la première borne de courant continu, que la deuxième borne de puissance de T2 (2) soit reliée à la première borne de puissance de T4 (4) et à la deuxième borne de courant alternatif, et que la deuxième borne de puissance de T6 (6) soit reliée à la première borne de puissance de T3 (3) et à la première borne de courant alternatif ; et dans lequel la première borne du condensateur de stockage est reliée à une borne de courant continu, et la deuxième borne du condensateur de stockage est reliée à la deuxième borne respective des deux transistors T1 (1) et T5 (5) dont la première borne respective est reliée respectivement à l'une des bornes de courant alternatif.

8. Procédé de commande d'un circuit de convertisseur de courant constitué de plusieurs sous-modules de construction identique et cadencés respectivement avec une fréquence d'horloge, pour la conversion bidirectionnelle d'une tension continue d'une alimentation de tension continue, en une tension polyphasée de fréquence variable d'un système de tensions polyphasées, les sous-modules comprenant

- chacun deux bornes de courant continu (X1, X2),
- deux bornes de courant alternatif (A1, A2),
- un condensateur de stockage (9), qui est dimensionné de manière à ne pouvoir compenser que le faible besoin d'énergie entre les cycles d'horloge individuels de la fréquence d'horloge, et
- un certain nombre de transistors de commutation, la combinaison de leurs états de commutation permettant de régler la tension aux bornes de courant continu du sous-module, indépendamment de la tension aux bornes de courant alternatif du sous-module,

et les bornes de courant continu des sous-modules sont montées en série, les sous-modules étant commandés quant à leur cadencement et à la largeur d'impulsion de manière telle

que les bornes de courant alternatif de l'un ou d'une partie de tous les sous-modules, forment respectivement l'une d'au moins deux phases décalées en phase du système de tensions polyphasées.

9. Procédé selon la revendication 8, d'après lequel la commande du circuit de convertisseur de courant sert à commander une machine à induction quant à sa vitesse de rotation et à son couple.

**10.** Procédé selon l'une des revendications 8 ou 9, d'après lequel les sous-modules sont commandés, quant à leur cadencement, de manière décalée en phase, de sorte qu'une fréquence résultante de parasites sur l'alimentation de tension continue s'obtient à partir de la fréquence d'horloge multipliée par le nombre de sous-modules.

Fig. 1

Fig. 2

Fig. 3

Fig. 4

**Fig. 5**

**Fig. 6**

17

**Fig. 7**

18

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10103031 A1
- DE 102007013462 A1
- US 6519169 B1

**In der Beschreibung aufgeführte Nicht-Patentliteratur**

- **JIH-SHENG LAI.** Multilevel Converters -A New Breed of Power Converters. *IEEE TRANSACTIONS ON INDUSTRY APPLICATIONS,* vol. 32 (3